# FASCICULE DE BREVET EUROPEEN

(11) **EP 0 612 597 B1**
(45) Date de publication et mention de la délivrance du brevet: **19.03.1997**
(21) Numéro de dépôt: 94400138.7
(22) Date de dépôt: 24.01.1994
(51) Int. Cl.: B28B 1/00, B28B 1/14, B28B 1/29, C04B 35/80, C03C 14/00

(54) **Procédé et dispositif pour la fabrication d'un semi-produit en bande utilisable dans la fabrication de matériaux ou produits composites à matrice céramique renforcée par des fibres**
Verfahren und Vorrichtung zur Herstellung von bandförmigen Grünkörpern, verwendbar zur Herstellung von Verbundwerkstoffen oder -produkten mit faserverstärkter Keramikmatrix
Process and apparatus for making striplike green body usable for fabricating composite materials or products with fiber-reinforced matrix

(30) Priorité: 28.01.1993 FR 9300855
(43) Date de publication de la demande: 31.08.1994
(73) Titulaire: AEROSPATIALE Société Nationale Industrielle, 75781 Paris Cédex 16 (FR)
(72) Inventeur: Larnac, Guy, F-33160 St Médard en Jalles (FR); Chartier, Thierry, F-87220 Feytiat (FR); Gault, Christian, F-87000 Limoges (FR); Fauchère, Jean-Charles, F-37330 Château-la-Vallière (FR)
(74) Mandataire: Lhuillier, René

(56) Documents cités:
- EP-A- 0 128 409
- EP-A- 0 514 611
- WO-A-92/00182
- US-A- 4 302 414
- US-A- 4 915 760
- US-A- 5 166 004
- DATABASE WPI Week 9313, Derwent Publications Ltd., London, GB; AN 93-104385 & JP-A-05 043 710 (FUJITSU LTD) 23 Février 1993
- CERAMIC FORUM INTERNATIONAL, vol.4, no.4, 1989, WIESBADEN DE pages 55 - 67 P. BOCH ET AL 'Ceramic Processing Techniques: The Case of Tape Casting.'
- ADVANCES IN CERAMICS: SCIENCE AND TECHNOLOGY OF ZIRCONIA III., vol.24, 1988, COLUMBUS US pages 1131 - 1138 T. CHARTIER ET AL 'Mechanical Properties of ZrO2-Al2O3 Laminated Composites.'
- MATERIALS SCIENCE FORUM, vol.34-36, 1988, EDERMANNSDORF CH pages 813 - 819 P. BOCH ET AL 'Understanding and improvement of ceramic processes: the example of tape casting.'

## Description

L'invention concerne la fabrication de matériaux et produits composites à matrice céramique renforcée par des fibres.

Elle concerne plus particulièrement l'application du coulage en bande, connu également sous les dénominations de "tape casting" ou "doctor blade process", à l'obtention d'un semi-produit se présentant sous forme d'un préimprégné utilisable dans la fabrication de matériaux composites à matrice céramique renforcée par des fibres, ou de produits constitués de tels matériaux.

L'invention a plus particulièrement pour objets un procédé d'obtention d'un semi-produit en bande utilisable dans la fabrication de matériaux composites à matrice céramique renforcée par des fibres, ou de pièces constituées de tels matériaux, un banc de coulage pour la mise en oeuvre de ce procédé et les applications dudit semi-produit.

En raison de leurs performances bien connues, les matériaux céramiques en général, et plus particulièrement les matériaux composites à matrice céramique renforcée par des fibres, paraissent susceptibles de développements importants dans différents domaines tels que notamment les industries aéronautique et spatiale.

A l'heure actuelle, ces développements sont souvent freinés par l'absence de techniques de fabrication bien appropriées aux applications envisagées.

La fabrication des matériaux céramiques en général comprend trois étapes essentielles, à savoir la préparation des poudres, la mise en forme et le frittage. Dans le cas particulier des matériaux céramiques constitués d'une matrice céramique renforcée par des particules ou par des fibres, la préparation comprend en outre, le plus souvent, l'imprégnation des particules ou des fibres constituant le renfort par une barbotine de poudre céramique ou de verre, avant la mise en forme.

Toutes ces étapes sont en général actuellement bien maîtrisées, sauf l'étape essentielle de mise en forme qui contrôle la présence éventuelle de défauts, tels que microfissures ou porosités, dans le matériau non fritté et la présence d'anomalies telles que taille incorrecte ou déformation de la pièce frittée obtenue ultérieurement.

Il a déjà été décrit que l'on pouvait remédier, au moins en partie, à ces inconvénients dans la fabrication de céramiques, renforcées ou non par des poudres, en ayant recours à la technique du coulage en bande pour obtenir des semi-produits pouvant avoir de grandes dimensions et des épaisseurs bien définies et constantes, si nécessaire très faibles. Le façonnage ultérieur de ces semi-produits donne des résultats supérieurs à ceux obtenus par les techniques classiques.

La technique de coulage en bande est déjà largement développée dans le domaine de l'électronique. Il a également été montré qu'elle pouvait être appliquée à la fabrication de céramiques à usage mécanique telles que composites lamellaires pour blindage, dans lesquelles les différentes couches, obtenues à partir de bandes coulées, sont essentiellement constituées d'une céramique éventuellement renforcée par des particules très fines, telles que par exemple une poudre de zircone (ZrO₂).

La technique du coulage en bande est décrite et commentée notamment par P. BOCH et T. CHARTIER dans Ceram. For. Int., 4 (4), 55-67, (1989) (référence 1).

L'application de cette technique à la fabrication de composites à renforcement particulaire à savoir à matrice en alumine (Al₂O₃) renforcée par de la poudre, c'est-à-dire des particules de faibles dimensions, de zircone (ZrO₂) est décrite et commentée par T. CHARTIER, J.L. BESSON et P. BOCH dans Advances in Ceramics, 24, Science and Technology of Zirconia III, Am. Ceram. Soc., 1131-38, (1988) (référence 2).

Le coulage en bande permet d'obtenir des feuilles céramiques crues de grandes dimensions et d'épaisseur variant de 25 à 1000 µm (référence 1) qui ne peuvent être obtenues par les procédés trationnnels de mise en forme comme le pressage, l'extrusion ou le coulage en moule poreux. L'homogénéité, la densité, l'état de surface et la résistance à cru des bandes coulées sont satisfaisants pour des applications telles que les substrats et les condensateurs multicouches en électronique.

Une étude effectuée sur une alumine a montré que les pièces réalisées par coulage en bande présentaient une charge à la rupture et une ténacité supérieures de 25 % à celles de pièces fabriquées par pressage (référence 2). Le coulage en bande conduit donc à un meilleur arrangement des particules ainsi qu'à une réduction de la taille du défaut critique, par rapport à un procédé classique de mise en forme.

Le coulage en bande consiste à déposer, par couchage ou par enduction, une suspension ou barbotine de poudre(s) et de constituants organiques sur une surface. L'évaporation du solvant conduit à une bande qui sera décollée du support. Le support est généralement une plaque de verre, une bande d'acier inoxydable ou un film plastique constitué par exemple de polytéréphtalate d'éthylène (PETP) commercialisé sous la dénomination Mylar® par la Société Du Pont de Nemours, de polyéthylène ou de triacétate de cellulose. La maîtrise de l'épaisseur de la bande exige une rhéologie (viscosité et comportement) de la suspension de coulage adaptée et constante ainsi qu'un gradient de cisaillement, imposé à la suspension, adapté et constant.

Les suspensions de coulage en bande sont des systèmes complexes à plusieurs constituants : poudre(s), solvant(s), dispersant(s), liant(s), plastifiant(s) et additifs tels que homogénéisateurs et/ou agents de décollement. Ces différents constituants jouent des rôles particuliers avant, pendant et/ou après le coulage en bande.

L'influence des caractéristiques de la poudre destinée à former la matrice céramique n'est pas propre à la technique de coulage en bande. Par exemple, la répartition granulométrique influence la rhéologie de la suspension et l'arrangement des particules, et donc la densité à cru et le retrait au frittage.

Le solvant qui est le plus souvent un mélange de solvants, assure la solubilisation des différents constituants organiques et participe à la dispersion et à la désagglomération de la poudre destinée à former la matrice céramique afin d'obtenir une suspension homogène.

La dispersion de cette poudre est une étape fondamentale dans le procédé de coulage. Le dispersant assure la dispersion ainsi que la stabilisation de fortes teneurs en poudre dans la suspension.

Le liant assure la cohésion de la bande crue après évaporation du solvant. Il doit :
- apporter une cohésion suffisante pour une teneur faible,
- s'éliminer facilement lors de la pyrolyse sans laisser de résidus carbonés,
- avoir une température de transition vitreuse basse afin d'assurer une bonne mobilité des particules de poudre et de faciliter l'étape de thermocompression,
- conférer à la suspension de coulage un comportement rhéologique rhéofluidifiant afin de permettre le coulage avec une viscosité faible ainsi que d'éviter la sédimentation des particules au repos (suspension et bande juste après le coulage) avec une viscosité élevée.

Le plastifiant confère à la bande crue une flexibilité nécessaire à sa manipulation. Les plastifiants sont apparentés aux solvants mais sont moins volatils. Ils agissent par rupture des liaisons entre les chaînes du polymère utilisé comme liant.

L'obtention de semi-produits destinés à être utilisés dans la fabrication de matériaux composites monolithiques à matrice céramique renforcée par une poudre, telle que par exemple une poudre de zircone, ne pose pas en soi de problème particulier dans la mesure où la poudre devant constituer la matrice céramique et la poudre destinée à constituer le renfort peuvent être utilisées directement et ensemble pour produire la suspension de coulage en bande, comme cela est décrit et représenté pages 1132 et 1133 de la référence 2.

En revanche, l'application de la technique de coulage en bande à la fabrication de matériaux composites à matrice céramique renforcée par des fibres qui implique la réalisation de bandes contenant des fibres, pose le problème, par rapport aux céramiques monolithiques, du mouillage et de l'imprégnation des fibres par les constituants de la suspension de coulage en bande.

Le brevet US-A-4 915 760 décrit un procédé de production d'un composite contenant une matière fibreuse. Ce procédé peut être mis en oeuvre en utilisant une technique classique de coulage en bande.

Ce brevet enseigne qu'avant le coulage en bande, les fibres sont complètement revêtues de nitrure de bore, avec une épaisseur suffisante pour empêcher la réaction entre la matière fibreuse et la matériau formant la matrice. Cette matrice est formée à partir de particules céramiques, c'est-à-dire déjà à l'état cristallin. De plus, l'alignement des fibres avant le coulage en bande se fait selon un processus complexe, en dehors du banc de coulage.

Enfin, et surtout, ce brevet ne résoud en rien le problème du mouillage et de l'imprégnation des fibres par les constituants de la suspension de coulage.

Selon l'invention, on a maintenant trouvé qu'il est possible d'appliquer la technique de coulage en bande à la fabrication de matériaux composites à matrice céramique renforcée par des fibres, ou de pièces constituées de tels matériaux, en coulant une suspension de coulage présentant une affinité chimique pour la surface des fibres utilisées, sur des fibres non enrobées, éventuellement prétraitées pour favoriser cette affinité, lesquelles fibres sont disposées sur une plaque et tendues entre deux peignes disposés respectivement à chaque extrémité de ladite plaque.

Ce procédé permet d'obtenir un semi-produit en bande présentant une microstructure homogène et une densité à cru au moins égale à 55 % de la densité théorique, et qui peut être densifié à une température inférieure aux températures habituellement nécessaires pour obtenir la même densité de produit fini.

Selon l'un de ses aspects, l'invention a pour objet un procédé de préparation d'un semi-produit en bande utilisable dans la fabrication de matériaux composites à matrice céramique renforcée par des fibres, ou de pièces constituées de tels matériaux, lequel procédé comprend essentiellement l'étape consistant à appliquer, selon la technique de coulage en bande, une suspension ou barbotine de la poudre destinée à constituer la matrice, sur des fibres disposées sur une plaque, caractérisé en ce que lesdites fibres sont tendues entre deux peignes disposés respectivement à chaque extrémité de ladite plaque, en ce que ladite suspension ou barbotine présente une affinité chimique pour la surface desdites fibres et en ce que lesdites fibres, non enrobées, ont été éventuellement prétraitées pour favoriser l'affinité chimique de la barbotine.

La fabrication du semi-produit ou préimprégné selon l'invention nécessite la mise au point de la suspension ou barbotine de coulage destinée à constituer la matrice.

Cette suspension doit présenter une rhéologie permettant le coulage en bande et des caractéristiques telles que la bande crue présente une bonne tenue mécanique et un comportement satisfaisant dans les étapes ultérieures de son traitement telles que thermocompression, pyrolyse et densification.

Les constituants de la suspension ou barbotine de coulage et leurs proportions sont donc déterminés de manière à atteindre ces objectifs.

La poudre destinée à constituer la matrice peut être choisie parmi les poudres habituellement utilisées pour fabriquer des composites à matrice céramique renforcée par des fibres et notamment parmi les poudres de verre issues des voies sol-gel, sol-sel ou verrière. Il peut s'agir notamment, mais non exclusivement, d'une poudre de type MgO, Al₂O₃, SiO₂, Li₂O (MASL), d'une poudre de type Li₂O, Al₂O₃, SiO₂ (LAS), d'une poudre de type MgO, Al₂O₃, SiO₂, Y₂O₃ (MAS-Y) ou d'une poudre de type MgO, Al₂O₃, SiO₂, ZrO₂ (MAS-Zr).

La suspension ou barbotine contient, en général, outre la poudre destinée à constituer la matrice, un ou plusieurs solvants, un ou plusieurs dispersants, un ou plusieurs liants, un ou plusieurs plastifiants et éventuellement un ou plusieurs additifs choisis notamment parmi les homogénéisateurs et les agents de décollement.

La nature et la proportion de ces solvants ou produits dépend essentiellement de la nature de la poudre utilisée, de la nature des fibres de renforcement utilisées, des caractéristiques particulières recherchées pour le semi-produit en bande fabriqué et des utilisations ultérieures envisagées de ce semi-produit.

L'homme du métier pourra sans difficulté déterminer la nature et la proportion de ces solvants ou produits, sur la base de ses connaissances générales en la matière.

Pour fixer les idées, on citera ci-après, à titre illustratif mais non limitatif, un certain nombre de solvants et de produits des types susmentionnés qui peuvent être utilisés selon l'invention.

Des solvants qui peuvent être utilisés selon l'invention sont notamment les mélanges méthyléthylcétone/éthanol, notamment à 66:34 % en volume, la méthyléthylcétone, les mélanges trichloréthylène/éthanol, le toluène, les mélanges trichloréthylène/alcool butylique/tétrachloréthylène et les mélanges trichloréthane/éthanol.

Des dipersants qui peuvent être utilisés selon l'invention sont notamment l'huile de menhaden, le trioléate de glycérol, les éthers alkyliques des polyéthylèneglycols et les esters phosphoriques.

Des liants qui peuvent être utilisés selon l'invention sont notamment des liants de type acrylique, l'acétate de chloroéthylène et le polyvinylbutyral.

Des plastifiants qui peuvent être utilisés selon l'invention sont notamment le phtalate de butyle et benzyle, le phtalate de diéthyle, le phtalate de dibutyle, le butylphtaloylbutylglycol, l'hexanoate de triéthylèneglycol, le phtalate de dioctyle et les polyéthylèneglycols.

Comme homogénéisateur, on peut utiliser, selon l'invention, par exemple la cyclohexanone.

Des agents de décollement qui peuvent être utilisés, si nécessaire, selon l'invention sont par exemple des huiles du type huiles végétales.

Toutes les fibres habituellement utilisées dans la fabrication de matériaux composites à matrice céramique et renfort fibreux peuvent être utilisées selon l'invention. Il s'agit de fibres réfractaires, telles que des fibres céramiques de SiC, de Al₂O₃, de SiO₂-AL₂O₃ ou de Si₃N₄, ou de fibres de carbone ou de SiO₂.

Pour obtenir un bon mouillage et une bonne imprégnation des nappes de fibres par la suspension ou barbotine, il est nécessaire que cette suspension ou barbotine présente une affinité chimique pour la surface desdites fibres.

En général, cette affinité chimique n'existe pas ou est insuffisante. Il convient donc d'ajouter à la suspension ou barbotine au moins un agent apte à produire cette affinité chimique ou à la renforcer. Il s'agit en général d'au moins un agent mouillant compatible avec les constituants organiques présents.

La nature de cet agent mouillant dépend de la nature de ces constituants organiques, notamment de celle du dispersant et du liant, de la nature des fibres utilisées et du prétraitement qu'elles ont éventuellement subi.

L'homme du métier pourra aisément, sur la base de ses connaissances habituelles et éventuellement d'essais préliminaires simples, déterminer la nature de l'agent mouillant à utiliser, en fonction de la nature et de l'état des fibres, d'une part et des constituants organiques de la suspension ou barbotine, notamment du dispersant et du liant, d'autre part.

Il va de soi que, si nécessaire, plusieurs agents mouillants pourront être ajoutés à la suspension ou barbotine.

Par ailleurs, il est dans certains cas nécessaire, en particulier lorsque les fibres contiennent du carbone, qu'elles aient subi, après leur désensimage éventuel, un prétraitement favorisant leur mouillabilité par une suspension ou barbotine de coulage en milieu organique, grâce à l'adsorption d'un agent mouillant.

Avantageusement, ce prétraitement est effectué par immersion des fibres dans le solvant ou mélange de solvants utilisé dans la suspension ou barbotine, contenant le même agent mouillant ou tensio-actif que la suspension ou barbotine. Les fibres sont ensuite séchées à la température ambiante afin d'évaporer le solvant sans dégrader l'agent mouillant.

A titre d'exemple et pour fixer les idées, on peut indiquer que la mouillabilité de fibres à surface carbonée (telles que fibres de SiC ou de carbone, par exemple), par une suspension ou barbotine de coulage en milieu organique contenant du polyvinylbutyral comme liant et un ester phosphorique comme dispersant, peut être obtenue au moyen d'un agent tensio-actif chloré qui est également utilisé pour le prétraitement des fibres. Cet agent tensio-actif chloré est avantageusement constitué d'un ester ou mélange d'esters d'acide(s) fluoroaliphatique(s), tel que par exemple le mélange commercialisé par la société 3M sous la dénomination Fluorad® FC 430.

Le support peut être constitué par exemple d'une plaque de verre ou d'une bande d'acier inoxydable. Avantageusement, pour faciliter le décollement du semi-produit obtenu, la suspension ou barbotine est déposée sur une pellicule reposant sur la plaque et formée d'une matière synthétique telle que par exemple du Mylar®, du polyéthylène ou du triacétate de cellulose, au-dessus de laquelle les fibres sont tendues.

Le procédé selon l'invention peut être mis en oeuvre au moyen d'un banc de coulage en bande comportant un sabot de distribution d'une suspension ou barbotine de coulage sur une table, lequel sabot est déplaçable sur toute la longueur de la table, au-dessus d'un support plan et fixe et dispose de moyens pour le réglage de l'épaisseur de la bande coulée, caractérisé en ce que ledit support est muni de peignes d'extrémités aptes à tendre et maintenir un réseau de mèches parallèles de fibres sur ledit support et en ce que ledit sabot est profilé intérieurement et extérieurement de manière à être adapté au coulage sur des fibres.

Avantageusement, le sabot est supporté par un chariot mobile entraîné par une vis à billes, et est guidé par un guide à billes, la vis et le guide s'étendant parallèlement sur toute la longueur de la table.

Avantageusement encore, les moyens pour le réglage de l'épaisseur de la bande coulée sont constitués d'un couteau manoeuvrable par une vis micrométrique et coulissant le long d'une plaque verticale formant la paroi arrière du sabot.

Selon un mode préféré de réalisation, le sabot se présente sous forme d'un réservoir, ouvert à sa partie inférieure, dont la paroi avant, dans le sens du déplacement, présente une face extérieure inclinée et/ou profilée et une face intérieure également inclinée et/ou profilée pour former un entonnoir et de manière à favoriser l'écoulement de la suspension ou barbotine, et dont la paroi arrière est constituée d'une plaque verticale fixe contre laquelle coulisse une plaque mobile faisant office de couteau, manoeuvrable à l'aide d'une ou plusieurs vis micrométriques.

Avantageusement, chaque peigne est constitué d'une partie fixe en forme de L, pourvue d'orifices régulièrement espacés pour le passage des mèches de fibres et d'une plaquette de fixation destinée à être rapportée sur la partie fixe pour bloquer le réseau de mèches parallèles de fibres.

Pour la mise en oeuvre de ce procédé, on peut avantageusement utiliser le banc de coulage mis au point et fabriqué par T. CHARTIER et P. BOCH [Centre National de la Recherche Scientifique (CNRS) - Ecole Nationale Supérieure de Céramique Industrielle (ENSCI)], commercialisé, sous licence du CNRS, par la Société CERLIM EQUIPEMENTS, Limoges (France), après l'avoir modifié en le munissant de peignes d'extrémités et en remplaçant le sabot de coulage habituel par un sabot profilé intérieurement et extérieurement de façon à être adapté au coulage sur des fibres.

Quel que soit son mode particulier de mise en oeuvre, le procédé selon l'invention permet d'obtenir un semi-produit présentant des caractéristiques améliorées par rapport aux semi-produits obtenus jusqu'à présent en utilisant la technique d'imprégnation classique de fibres, d'utiliser pour la préparation de la barbotine une poudre de verre issue de la voie sol-gel, sol-sel ou verrière et de ne pas avoir à recourir à l'enrobage préalable des fibres.

De plus, la technique de coulage en bande selon l'invention présente un avantage économique important dans la mesure où, grâce aux peignes, les mèches de fibres sont disposées et tendues parallèlement, de façon simple et aisée, à partir d'un même enroulement, directement sur le banc de coulage, sans qu'il soit nécessaire d' "aligner" des mèches une par une, comme cela se fait habituellement.

Les dessins annexés représentent :
Figure 1, une vue schématique en perspective de l'ensemble du banc de coulage en bande selon l'invention ;
Figure 2, une vue à plus grande échelle en perspective d'un peigne de fixation ;
Figure 3, une vue schématique en coupe verticale du sabot de distribution ;
Figure 4, l'organigramme de la préparation de la suspension de coulage utilisée dans l'exemple dont la description suit.

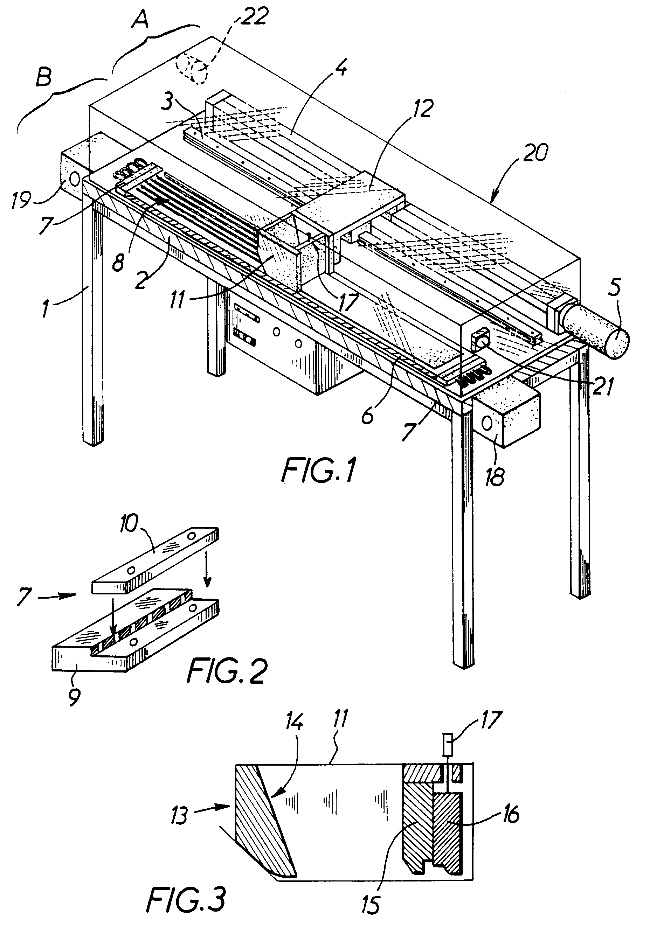

Les figures 1 à 3 seront décrites en détail en relation avec cet exemple.

### Exemple :

Obtention d'un semi-produit pour la fabrication de composites à matrice céramique de type MASL renforcée par des fibres de carbure de silicium.

### Préparation d'une suspension de coulage.

On réalise une suspension de coulage à partir d'une poudre de verre de type MgO, Al₂O₃, SiO₂, Li₂O (MASL), fournie par la Société Aérospatiale et obtenue par la voie sol-gel, comme décrit dans le brevet FR-A-2 655 327(= EP 0 514 611).

Cette poudre présente une surface spécifique élevée (112 m².g⁻¹).

La composition de cette suspension est optimisée en ajustant d'une part, le rapport matières organiques/poudre et d'autre part, le rapport liant/plastifiant. Le rapport matières organiques/poudre doit être le plus faible possible afin d'obtenir une densité à cru élevée et de faciliter la pyrolyse ultérieure.

### Composition (% en masse) :

| | |
|---|---|
| - poudre de MASL | 45,87 |
| - dispersant | 0,46 |
| - agent mouillant (tensio-actif) | 0,46 |
| - solvant | 41,28 |
| - plastifiant | 6,88 |
| - liant | 5,05. |

Dans le cas particulier étudié :
- le dispersant est un ester phosphorique (Beycostat® C213 de la Société CECA) ;
- l'agent mouillant est un mélange d'esters d'acides fluoroaliphatiques (Fluorad® FC 430 de la Société 3M) ;
- le solvant est un mélange de 66 % en volume de méthyléthylcétone et de 34 % en volume d'éthanol ;
- le liant est le polyvinylbutyral (Butvar® B 98 de la Société Monsanto) ; et
- le plastifiant est le phtalate de dibutyle.

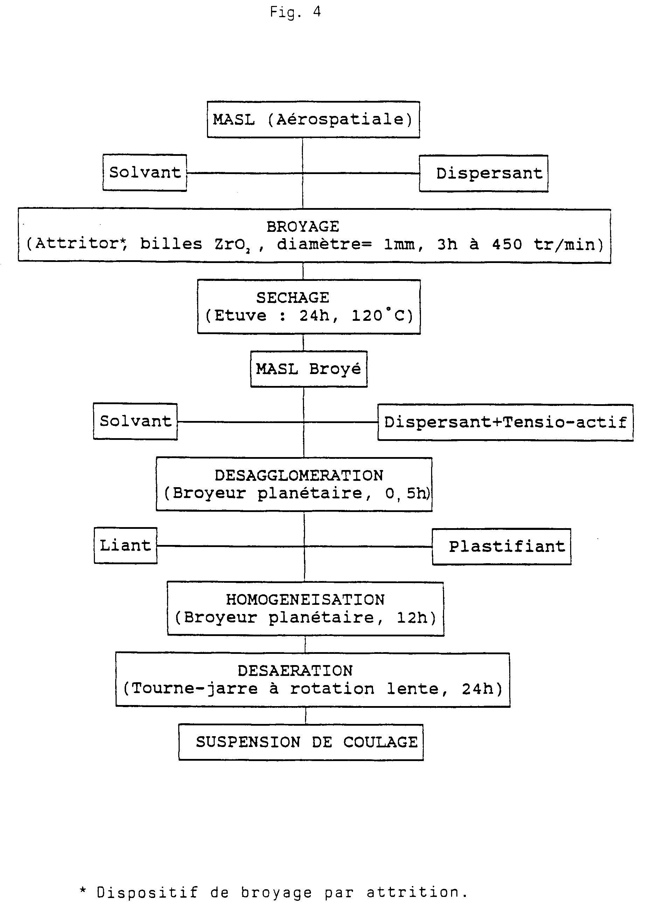

La préparation de cette suspension à partir des constituants mentionnés ci-dessus est réalisée selon l'organigramme représenté à la figure 4 annexée.

### Prétraitement des fibres :

On utilise des fibres longues de carbure de silicium (SiC) commercialisées par la Société Nippon Carbon Co., sous la dénomination Nicalon® NLM 202. Ces fibres se présentent sous forme de torons ou mèches bobinés, comprenant 500 monofilaments. Leur densité est de 2,55 et leur masse linéique est de 0,20 à 0,22 g.m⁻¹.

Après désensimage selon une technique habituelle bien connue qui peut être chimique (par exemple trempage dans un bain acétone/alcool 50:50 % en volume, pendant 24 h) ou thermique (passage des fibres dans un four à une température comprise entre 500 et 700°C), les fibres sont immergées dans un bain composé du solvant (méthyléthylcétone/éthanol 66:34 % en volume) et de l'agent mouillant (tensio-actif) utilisés pour préparer la suspension de MASL. Ensuite, les fibres sont séchées à la température ambiante pour évaporer le solvant, sans dégrader l'agent mouillant.

### Coulage en bande d'un préimprégné et obtention d'un semi-produit :

Pour réaliser le coulage en bande, on utilise le banc représenté dans son ensemble à la figure 1. Un plateau de granit 2 repose sur une table support 1. Le plateau est divisé longitudinalement en deux parties A et B. La partie A supporte un guide à billes 3 et une vis à billes 4 s'étendant parallèlement sur toute la longueur de la table. Un moteur d'entraînement 5 équipé d'un tachymètre est monté à une extrémité de la vis à billes. L'autre partie longitudinale B constitue la zone de coulage proprement dite. ELle supporte une plaque de verre 6 recouverte d'une feuille de Mylar® destinée à éviter l'adhérence de la bande coulée sur le verre. A chaque extrémité de la plaque de verre 6 est fixé un peigne 7 destiné à maintenir et tendre un réseau de mèches parallèles 8 de fibres. Le peigne représenté plus en détail à la figure 2 comporte une partie fixe 9 en forme de L, pourvue d'orifices régulièrement espacés pour le passage des mèches de fibres et une plaquette de fixation 10 destinée à être rapportée et fixée sur la partie fixe pour bloquer les mèches. Grâce à ces peignes, les fibres sont disposées parallèlement, selon le pas imposé, au-dessus de la plaque de verre.

Le coulage est assuré par-dessus lesdites mèches 8 grâce à un sabot mobile de coulage 11 représenté plus en détail à la figure 3. Le sabot proprement dit est supporté par un chariot mobile 12 entraîné par la vis à billes 4 et qui coulisse sur le guide à billes 3. Le sabot 11 se présente comme un réservoir ouvert à sa partie inférieure. La face extérieure 13 de la paroi avant du sabot, dans le sens de son déplacement matérialisé par la flèche, est avantageusement inclinée et/ou profilée.

De son côté, la face intérieure 14 de ladite paroi avant est également inclinée et/ou profilée pour former entonnoir et favoriser l'écoulement de la matière. La paroi arrière du sabot est constituée d'une plaque verticale fixe 15 contre laquelle coulisse une plaque mobile faisant office de couteau 16 manoeuvrable à l'aide de la vis micrométrique 17.

On voit à la figure 1 qu'à chaque extrémité de la partie B de la table sont fixés des coffrets qui représentent un dérouleur 18 et un enrouleur 19 destinés à mettre en place une bande de Mylar® sur la plaque de verre avant l'opération de coulage et à la retirer après le coulage. Enfin on notera qu'un capot protecteur 20 coiffe l'ensemble de la table. Il assure une protection antipollution du banc, et une sécurité contre la chute d'objets et de poussières. L'enceinte intérieure audit capot est avantageusement ventilée par un orifice d'entrée d'air 21 éventuellement équipé d'un filtre et d'un ventilateur, tandis qu'un orifice de sortie 22, du côté opposé, permet de raccorder le capot à une hotte d'extraction non représentée.

La suspension destinée à être coulée sur le réseau de mèches de fibres est donc placée dans le sabot 11 immobilisé à une extrémité du banc. Selon la nature et le volume du produit à distribuer, tout ou partie du sabot est rempli. Ensuite la vis à billes 4 est mise en rotation par le moteur 5 ce qui a pour effet de déplacer le sabot de façon parfaitement linéaire grâce au guide à billes 3 et à vitesse parfaitement constante grâce au tachymètre du moteur 5. Au cours de son mouvement, le sabot distribue de façon continue la suspension de coulage sur toute la longueur du réseau de mèches 8 de fibres, jusqu'à venir en butée contre le peigne d'extrémité 7. Grâce à la forme en entonnoir du volume intérieur du sabot et à la rhéologie adaptée de la suspension, le produit s'écoule de façon régulière. L'épaisseur de la bande coulée est déterminée par la hauteur du couteau 16 au-dessus de la plaque de verre 6 et par la vitesse du sabot. Les plans inclinés du sabot permettent un bon lissage du dépôt. Enfin la vitesse d'avancement du chariot porteur du sabot est évidemment ajustée en fonction de l'épaisseur recherchée et de la nature du produit coulé.

Selon un mode de réalisation de cet exemple, le pas entre les mèches, imposé par les peignes d'extrémité 7, est fixé à 0,9 mm. La hauteur du couteau mobile 16 est réglée à 1 mm et la vitesse relative entre le sabot 11 et le support 1 est réglée à 0,7 m.min⁻¹.

Le solvant est évaporé sur le banc puis on décroche la bande de préimprégné ainsi obtenue.

L'épaisseur de cette bande est de 400 µm, ce qui correspond à un taux volumique des fibres de 36,1 %. Elle contient 21,88 % en masse de matières organiques.

On constate une bonne imprégnation de la matrice entre les fibres et une microstructure homogène de la matrice, avec une densité à cru élevée (55 % de la densité théorique).

Ces caractéristiques sont parfaitement reproductibles.

### Applications :

Le semi-produit en bande obtenu comme décrit ci-dessus, ou selon tout autre mode de réalisation de l'invention, peut être utilisé pour fabriquer des matériaux composites à matrice céramique renforcée par des fibres. Pour ce faire, on peut thermocomprimer des plis préimprégnés obtenus par coulage en bande, avec une séquence d'empilement désirée, notamment en ce qui concerne l'orientation des fibres. De plus, l'épaisseur des plis préimprégnés pouvant être ajustée, on peut sans difficulté faire varier le taux volumique des fibres dans les différents plis.

La thermocompression qui est adaptable à la fabrication de pièces présentant des courbures, s'effectue dans des conditions préservant les propriétés des fibres, à savoir, dans le cas des fibres de SiC, température inférieure à 100°C et faible pression (environ 50 MPa). Cette étape permet la réorganisation des particules au sein de la phase organique ainsi que la libération des contraintes résiduelles provenant du séchage.

On peut ainsi obtenir, sans compression à chaud, par exemple un composite cru 2D à plis croisés et à microstructure homogène.

Ce composite peut être ensuite pyrolysé à une température ne dépassant pas 700°C, avec un cycle thermique adapté. La pyrolyse est effectuée sous air afin d'éviter la présence de résidus carbonés et de carbone résiduel au sein de la matrice qui pourraient être préjudiciables aux propriétés mécaniques à chaud, dans un environnement oxydant, du produit fini.

Enfin, le composite pyrolysé peut être soumis à un traitement de densification à une température inférieure à la température de détérioration des fibres, grâce à la microstructure homogène et à la densité à cru élevée (qui peut atteindre 60 % de la valeur théorique) du semi-produit obtenu selon l'invention.

Selon une variante, on peut réaliser, par thermocompression, des liaisons ("soudage") entre des composites obtenus selon l'invention, au moyen de bandes de matrice ne comportant pas de fibres, obtenues selon la technique de coulage en bande classique décrite dans l'art antérieur.

## Revendications

1. Procédé de préparation d'un semi-produit en bande utilisable dans la fabrication de matériaux composites à matrice céramique renforcée par des fibres, ou de pièces constituées de tels matériaux, lequel procédé comprend essentiellement l'étape consistant à appliquer, selon la technique de coulage en bande, une suspension ou barbotine de la poudre destinée à constituer la matrice, sur des fibres (8), disposées sur une plaque (6), caractérisé en ce que lesdites fibres sont tendues entre deux peignes (7) disposés respectivement à chaque extrémité de ladite plaque, en ce que ladite suspension ou barbotine présente une affinité chimique pour la surface desdites fibres et en ce que lesdites fibres, non enrobées, ont été éventuellement prétraitées pour favoriser l'affinité chimique de la barbotine.

2. Procédé selon la revendication 1, caractérisé en ce que la poudre destinée à constituer la matrice est issue de la voie sol-gel, sol-sel ou verrière.

3. Procédé selon la revendication 1 ou 2, caractérisé en ce que la suspension ou barbotine contient, outre la poudre, un ou plusieurs solvants, un ou plusieurs dispersants, un ou plusieurs liants, un ou plusieurs plastifiants et, éventuellement, un ou plusieurs additifs choisis notamment parmi les homogénéisateurs et les agents de décollement.

4. Procédé selon l'une quelconque des revendications 1 à 3, caractérisé en ce que la suspension ou barbotine contient en outre au moins un agent apte à produire une affinité chimique pour les fibres ou à la renforcer, de préférence au moins un agent mouillant compatible avec les constituants organiques présents.

5. Procédé selon l'une quelconque des revendications 1 à 4, caractérisé en ce que les fibres sont choisies dans le groupe constitué par les fibres céramiques de SiC, de Al₂O₃, de SiO₂-Al₂O₃ ou de Si₃N₄, les fibres de carbone et les fibres de SiO₂.

6. Procédé selon l'une quelconque des revendications 1 à 5, caractérisé en ce que les fibres utilisées ont subi un prétraitement favorisant leur mouillabilité par la suspension ou barbotine de coulage en milieu organique, grâce à l'adsorption d'un agent mouillant.

7. Procédé selon l'une quelconque des revendications 1 à 6, caractérisé en ce que la suspension ou barbotine est déposée sur une pellicule de matière synthétique reposant sur la plaque (6) et au-dessus de laquelle les fibres (8) sont tendues.

8. Suspension ou barbotine pour la mise en oeuvre du procédé selon l'une quelconque des revendications 1 à 7, contenant la poudre destinée à constituer la matrice, un ou plusieurs solvants, un ou plusieurs dispersants, un ou plusieurs liants, un ou plusieurs plastifiants, éventuellement un ou plusieurs additifs choisis notamment parmi les homogénéisateurs et les agents de décollement, caractérisée en ce qu'elle contient en outre au moins un agent apte à produire une affinité chimique pour les fibres devant être utilisées ou à la renforcer, de préférence au moins un agent mouillant compatible avec les constituants organiques présents.

9. Banc de coulage en bande pour la mise en oeuvre du procédé selon l'une quelconque des revendications 1 à 7, comportant un sabot (11) de distribution d'une suspension ou barbotine de coulage sur une table (1), lequel sabot est déplaçable sur toute la longueur de la table, au-dessus d'un support plan et fixe (2, 6) et dispose de moyens pour le réglage de l'épaisseur de la bande coulée (16, 17), caractérisé en ce que ledit support est muni de peignes d'extrémités (7) aptes à tendre et maintenir un réseau de mèches parallèles de fibres (8) sur ledit support et en ce que ledit sabot est profilé intérieurement (14, 15) et extérieurement (13, 16) de manière à être adapté au coulage sur des fibres.

10. Banc de coulage selon la revendication 9, caractérisé en ce que le sabot (11) se présente sous forme d'un réservoir, ouvert à sa partie inférieure, dont la paroi avant (13, 14), dans le sens du déplacement, présente une face extérieure (13) inclinée et/ou profilée et une face intérieure (14) également inclinée et/ou profilée pour former un entonnoir et de manière à favoriser l'écoulement de la suspension ou barbotine, et dont la paroi arrière (15, 16) est constituée d'une plaque verticale fixe (15) contre laquelle coulisse une plaque mobile (16) faisant office de couteau, manoeuvrable à l'aide d'une ou plusieurs vis micrométriques (17).

11. Banc de coulage selon la revendication 9 ou 10, caractérisé en ce que chaque peigne (7) est constitué d'une partie fixe (9) en forme de L, pourvue d'orifices régulièrement espacés pour le passage des mèches de fibres (8) et d'une plaquette de fixation (10) destinée à être rapportée sur la partie fixe (9) pour bloquer le réseau de mèches parallèles de fibres (8).

12. Semi-produit en bande utilisable dans la fabrication de matériaux composites à matrice céramique renforcée par des fibres, ou de pièces constituées de tels matériaux, caractérisé en ce qu'il comporte une matrice à base de MgO, Al₂O₃, SiO₂, Li₂O (MASL), renforcée par des fibres longues de SiC, et présente une densité à cru de 55% de la densité théorique et une microstructure homogène de la matrice.

13. Utilisation du semi-produit en bande selon la revendication 12 ou tel qu'obtenu par mise en oeuvre du procédé selon l'une quelconque des revendications 1 à 7 pour fabriquer des matériaux céramiques renforcés par des fibres, ou des produits constitués de tels matériaux, par thermocompression de plis dudit semi-produit, avec une séquence d'empilement désirée, dans des conditions préservant les propriétés des fibres, avec pyrolyse subséquente éventuelle sous air, suivie d'un traitement éventuel de densification à une température inférieure à la température de détérioration des fibres.

14. Utilisation du semi-produit en bande selon la revendication 12 ou tel qu'obtenu par mise en oeuvre du procédé selon l'une quelconque des revendications 1 à 7 pour fabriquer, par thermocompression, des composites dans lesquels des bandes dudit semi-produit sont liées ou soudées entre elles au moyen de bandes de matrice ne comportant pas de fibres, obtenues selon la technique de coulage en bande.

## Claims

1. Process for the preparation of a green body in strip form usable for the manufacture of composite materials with fibre-reinforced ceramic matrix, or of parts composed of such materials, which process essentially comprises the step consisting of applying, by the tape casting technique, a suspension or slip of the powder intended to constitute the matrix, onto fibres (8), arranged on a plate (6), characterized in that the said fibres are stretched between two combs (7) arranged respectively at each end of the said plate, in that the said suspension or slip has a chemical affinity with the surface of the said fibres, and in that the said fibres, uncoated, have optionally been pre-treated to enhance the chemical affinity of the slip.

2. Process according to Claim 1, characterized in that the powder intended to constitute the matrix is the outcome of the sol-gel, sol-salt or glass route.

3. Process according to Claim 1 or 2, characterized in that the suspension or slip contains, apart from the powder, one or more solvents, one or more dispersants, one or more binders, one or more plasticisers and, optionally, one or more additives selected in particular from homogenizers and release agents.

4. Process according to any one of Claims 1 to 3, characterized in that the suspension or slip additionally contains at least one agent capable of producing a chemical affinity with the fibres or reinforcing it, preferably at least one wetting agent compatible with the organic constituents present.

5. Process according to any one of Claims 1 to 4, characterized in that the fibres are selected from the group consisting of SiC, Al₂O₃, SiO₂-Al₂O₃ or Si₃N₄ ceramic fibres, carbon fibres and SiO₂ fibres.

6. Process according to any one of Claims 1 to 5, characterized in that the fibres used have undergone pre-treatment enhancing their wettability by the casting suspension or slip in an organic medium, by means of the adsorption of a wetting agent.

7. Process according to any one of Claims 1 to 6, characterized in that the suspension or slip is deposited on a film of synthetic material resting on the plate (6) and over which the fibres (8) are stretched.

8. Suspension or slip for the execution of the process according to any one of Claims 1 to 7, containing the powder intended to constitute the matrix, one or more solvents, one or more dispersants, one or more binders, one or more plasticisers, optionally one or more additives selected in particular from homogenizers and release agents, characterized in that it additionally contains at least one agent capable of producing a chemical affinity with the fibres that are to be used or reinforcing it, preferably at least one wetting agent compatible with the organic constituents present.

9. Tape-casting bench for the execution of the process according to any one of Claims 1 to 7, including a distribution shoe (11) for a casting suspension or slip on a table (1), which shoe is movable over the entire length of the table, over a flat, fixed support (2, 6) and has means for regulating the thickness of the cast tape (16, 17), characterized in that the said support is equipped with end combs (7) capable of stretching and holding an array of parallel fibre rovings (8) on the said support and in that the said shoe is profiled internally (14, 15) and externally (13, 16) so as to be suitable for casting on fibres.

10. Casting bench according to Claim 9, characterized in that the shoe (11) is in the form of a reservoir, open at the bottom, and the front wall (13, 14) of which, in the direction of movement, has an inclined and/or profiled outer face (13) and an inner face (14) which is also inclined and/or profiled in order to form a funnel and so as to facilitate the flow of the suspension or slip, and the rear wall (15, 16) of which is formed by a fixed vertical plate (15) against which slides a movable plate (16) acting as a knife, which can be manoeuvred by means of one or more micrometric screws (17).

11. Casting bench according to Claim 9 or 10, characterized in that each comb (7) is formed by a fixed L-shaped portion (9) provided with regularly spaced openings for the passage of the fibre rovings (8) and by a small fixing plate (10) intended to be attached to the fixed portion (9) in order to clamp the array of parallel fibre rovings (8).

12. Green body in strip form usable in the manufacture of composite materials with fibre-reinforced ceramic matrix, or of parts composed of such materials, characterized in that it includes a matrix based on MgO, Al₂O₃, SiO₂, Li₂O (MASL), reinforced by long SiC fibres, and has a raw density of 55% of the theoretical density and a homogeneous micro-structure of the matrix.

13. Use of the green body in strip form according to Claim 12 or as obtained by the execution of the process according to any one of Claims 1 to 7 to manufacture fibre-reinforced ceramic materials, or products composed of such materials, by heat-compression of plies of the said green body, with a desired stacking sequence, under conditions preserving the properties of the fibres, with optional subsequent pyrolysis in air, followed by an optional densification treatment at a temperature below the deterioration temperature of the fibres.

14. Use of the green body in strip form according to Claim 12 or as obtained by the execution of the process according to any one of Claims 1 to 7 to manufacture, by heat-compression, composites in which strips of the said green body are bonded or welded to one another by means of matrix strips not including fibres, obtained by the tape casting technique.

## Patentansprüche

1. Verfahren zur Herstellung eines bandförmigen Halbfertigproduktes, das bei der Fertigung von Verbundwerkstoffen mit faserverstärkter Keramikmatrix oder von aus solchen Materialien gebildeten Werkstücken verwendbar ist, wobei das Verfahren im wesentlichen den Schritt beinhaltet, der daraus besteht, gemäß der Technik des Bandgießens eine Suspension oder einen Schlicker aus dem Pulver, das zum Bilden der Matrix vorgesehen ist, auf Fasern (8) anzuwenden, die auf einer Platte (6) angeordnet sind, dadurch gekennzeichnet, daß die Fasern zwischen zwei Kämmen (7) eingespannt werden, die jeweils an jedem Ende der Platte angeordnet sind, daß die Suspension oder der Schlicker eine chemische Affinität fur die Oberfläche der Fasern aufweist und daß die nicht beschichteten Fasern eventuell vorbehandelt wurden, um die chemische Affinität des Schlickers zu begünstigen.

2. Verfahren nach Anspruch 1, dadurch gekennzeichnet, daß das Pulver, das zum Bilden der Matrix vorgesehen ist, durch den Sol-Gel-, den Sol-Salz- oder den Glas-weg erhalten wurde.

3. Verfahren nach Anspruch 1 oder 2, dadurch gekennzeichnet, daß die Suspension oder der Schlicker außer dem Pulver ein oder mehrere Lösungsmittel, ein oder mehrere Dispersionsmittel, ein oder mehrere Bindemittel, ein oder mehrere Plastifizierungsmittel und eventuell ein oder mehrere Additive enthält, die insbesondere unter den Homogenisierungsmitteln und den Trennmitteln ausgewählt sind.

4. Verfahren nach einem der Ansprüche 1 bis 3, dadurch gekennzeichnet, daß die Suspension oder der Schlicker außerdem wenigstens ein Agens enthält, das dafür geeignet ist, eine chemische Affinität für die Fasern zu erzeugen oder sie zu verstärken. vorzugsweise wenigstens ein Benetzungsmittel, das mit den vorliegenden organischen Bestandteilen kompatibel ist.

5. Verfahren nach einem der Ansprüche 1 bis 4, dadurch gekennzeichnet, daß die Fasern aus der Gruppe ausgewählt werden, die durch die keramischen Fasern aus SiC. Al₂O₃, SiO₂-Al₂O₃ oder Si₃N₄, die Kohlenstofffasern und die Fasern aus SiO₂ gebildet wird.

6. Verfahren nach einem der Ansprüche 1 bis 5, dadurch gekennzeichnet, daß die verwendeten Fasern einer Vorbehandlung unterworfen werden, die ihre Benetzbarkeit durch die Suspension oder den Schlicker für den Gießvorgang in organischem Milieu dank der Adsorption eines Benetzungsmittels begünstigt.

7. Verfahren nach einem der Ansprüche 1 bis 6, dadurch gekennzeichnet, daß die Suspension oder der Schlicker auf einem dünnen Film aus synthetischem Material aufgebracht wird, der auf der Platte (6) aufliegt und oberhalb dem die Fasern (8) eingespannt werden.

8. Suspension oder Schlicker für die Ausführung des Verfahrens nach einem der Ansprüche 1 bis 7, die/der das Pulver, das zum Bilden der Matrix vorgesehen ist, ein oder mehrere Lösungsmittel, ein oder mehrere Dispersionsmittel, ein oder mehrere Bindemittel, ein oder mehrere Plastifizierungsmittel und eventuell ein oder mehrere Additive, die insbesondere unter den Homogenisierungsmitteln und den Trennmitteln ausgewählt sind, enthält dadurch gekennzeichnet, daß sie/er außerdem wenigstens ein Agens enthält, das dazu geeignet ist, eine chemische Affinität für die zu verwendenden Fasern zu erzeugen oder sie zu verstärken, vorzugsweise wenigstens ein Benetzungsmittel, das mit den vorliegenden organischen Bestandteilen kompatibel ist.

9. Bank für Bandgießen zur Ausführung des Verfahrens nach einem der Ansprüche 1 bis 7, die einen Schuh (11) zur Verteilung einer Gieß-Suspension oder eines Gieß-Schlickers auf einem Tisch (1) umfaßt, wobei der Schuh über die gesamte Länge des Tisches hinweg oberhalb eines ebenen und fixierten Trägers (2, 6) verschiebbar ist und über Mittel (16, 17) zur Einstellung der Dicke des gegossenen Bandes verfügt, dadurch gekennzeichnet, daß der Träger mit endseitigen Kämmen (7) versehen ist, die dazu geeignet sind, auf dem Träger ein Netz aus parallelen Faserbändern (8) zu spannen und zu halten, und daß der Schuh innen (14, 15) und außen (13, 16) so mit einem Profil versehen ist, daß er zum Gießen auf die Fasern geeignet ist.

10. Gießbank nach Anspruch 9, dadurch gekennzeichnet, daß der Schuh (11) die Form eines an seinem unteren Teil offenen Reservoirs hat, dessen Vorderwand (13, 14) in der Verschiebungsrichtung eine Außenseite (13), die geneigt und/oder mit einem Profil versehen ist, und eine Innenseite (14) aufweist, die in gleicher Weise geneigt und/oder mit einem Profil versehen ist, um einen Trichter zu bilden und so das Abfließen der Suspension oder des Schlickers zu begünstigen, und dessen Rückwand (15, 16) aus einer vertikalen fixierten Platte (13) gebildet ist, gegen die eine bewegliche, als Messer dienende Platte (16) gleitet, die mit Hilfe von einer oder mehreren Mikrometerschrauben (17) manövrierbar ist.

11. Gießbank nach Anspruch 9 oder 10, dadurch gekennzeichnet, daß jeder Kamm (7) aus einem festen Teil (9) in Form eines L, der mit Öffnungen mit regelmäßigem Abstand für die Durchführung der Faserbänder (8) versehen ist, und aus einem Halteplättchen (10) besteht, das dafür vorgesehen ist, auf den festen Teil (9) aufgesetzt zu werden, um das Netz aus parallelen Faserbändern (8) festzulegen.

12. Bandförmiges Halbfertigprodukt, das bei der Fertigung von Verbundwerkstoffen mit faserverstärkter Keramikmatrix oder von Werkstücken, die aus solchen Materialien bestehen, verwendbar ist, dadurch gekennzeichnet, daß es eine Matrix auf der Basis von MgO, Al₂O₃, SiO₂, Li₂O (MASL) beinhaltet, die mit langen Fasern aus SiC verstärkt ist, und eine rohe Dichte von 55% der theoretischen Dichte und eine homogene Mikrostruktur der Matrix aufweist.

13. Verwendung des bandförmigen Halbfertigprodukts nach Anspruch 12 oder eines solchen, wie es durch Ausführung des Verfahrens nach einem der Ansprüche 1 bis 7 erhalten wird zur Herstellung von faserverstärkten Keramikmaterialien oder von aus solchen Materialien bestehenden Produkten durch Thermokompression von Lagen aus dem Halbfertigprodukt mit einer gewünschten Stapelfolge unter Bedingungen, welche die Eigenschaften der Fasern bewahren, mit eventueller nachfolgender Pyrolyse an Luft, gefolgt von einer eventuellen Behandlung zur Verdichtung bei einer Temperatur erhalten wird, die niedriger als die Temperatur ist, bei der die Fasern geschädigt werden.

14. Verwendung des bandförmigen Halbfertigprodukts nach Anspruch 12 oder eines solchen, wie es durch Ausführen des Verfahrens nach einem der Ansprüche 1 bis 7 erhalten wird, zur Herstellung von Verbundwerkstoffen durch Thermokompression, in denen Bänder des Halbfertigprodukts untereinander mittels Matrixbändern, die keine Fasern beinhalten, verbunden oder verschweißt sind, wie sie durch die Technik des Bandgießens erhalten werden.
